Europäisches Patentamt

European Patent Office

Office européen des brevets

(19)

(11) **EP 0 733 394 A1**

## (12) DEMANDE DE BREVET EUROPEEN

(43) Date de publication:
  **25.09.1996 Bulletin 1996/39**

(51) Int Cl.6: **B01D 53/047**

(21) Numéro de dépôt: **96400514.4**

(22) Date de dépôt: **13.03.1996**

(84) Etats contractants désignés:
  **DE GB SE**

(30) Priorité: **24.03.1995 FR 9503503**

(71) Demandeur: **L'AIR LIQUIDE, SOCIETE ANONYME POUR**
  **L'ETUDE ET L'EXPLOITATION DES PROCEDES**
  **GEORGES CLAUDE**
  **F-75321 Paris Cédex 07 (FR)**

(72) Inventeurs:
  • **Moreau, Serge**
    **78140 Velizy-Villacoublay (FR)**
  • **Sardan, Bernard**
    **78150 Le Chesnay (FR)**

(74) Mandataire: **Le Moenner, Gabriel et al**
  **L'AIR LIQUIDE, Société Anonyme**
  **pour l'étude et l'exploitation des procédés**
  **Georges Claude**
  **75, Quai d'Orsay**
  **75321 Paris Cédex 07 (FR)**

Remarques:
Une requête pour correction d'une partie de la description et de la fig. 2 a été présentée conformément à la règle 88 CBE. Il est statué sur cette requête au cours de la procédure engagée devant la division d'examen (Directives relatives à l'examen pratiqué à l'OEB, A-V, 3.).

(54) **Procédé de séparation d'azote de mélanges avec des composés moins polaires**

(57) Procédé de séparation d'azote d'un mélange de gaz contenant de l'azote et au moins un gaz moins polaire que l'azote, et utilisant une technique d'adsorption différentielle des gaz dite procédé PSA mettant en oeuvre un adsorbant de type zéolite, selon lequel on met en oeuvre le procédé PSA à une température au moins égale à 40°C en utilisant comme adsorbant une zéolite dont l'isotherme d'adsorption de l'azote à 20°C présente une courbure caractérisée par un paramètre C défini par la formule :

$$C = \frac{P_2}{P_1} \frac{q(P_1)}{q(P_2)}$$

où $q(P_1)$ représente la quantité d'azote adsorbée à la pression $P_1$ et
$q(P_2)$ celle adsorbée à la pression $P_2$; et
les pressions $P_1$ et $P_2$ sont définies respectivement à partir des pressions haute et basse du cycle PSA considéré ;
C étant au moins égal à 2,5.

EP 0 733 394 A1

## Description

La présente invention concerne un nouveau procédé de séparation de l'azote à partir d'un mélange de gaz contenant des gaz moins polaires.

La séparation des gaz de l'air en azote et oxygène, plus argon, est une technique établie qui fait appel aux propriétés différentielles d'adsorption des gaz sur tamis moléculaires zéolitiques. Le procédé universellement reconnu est le PSA "Pressure Swing Adsorption", qui utilise des différences de pressions pour:

1- adsorber l'azote à pression haute pour enrichir la phase gazeuse en oxygène,
2- désorber l'azote à pression basse pour régénérer les propriétés d'adsorption de la zéolite.

On distingue 3 types de procédé PSA:

- ceux où la pression haute est supérieure à la pression atmosphérique et la pression basse est supérieure ou égale à la pression atmosphérique; par exemple une pression haute d'environ 3 b (bars) absolus et une pression basse d'environ 1 b (schéma dit suratmosphérique ou PSA) ;
- ceux où la pression haute est supérieure à la pression atmosphérique; par exemple de l'ordre de 1,5 b, et la pression basse est inférieure à la pression atmosphérique, par exemple de l'ordre de 0.5b (schéma dit transatmosphérique ou Vacuum Pressure Swing Adsorption) ;
- enfin ceux où la pression haute est inférieure à 1,2 b et la pression basse est inférieure à la pression atmosphérique, par exemple une pression haute d'environ 1.1 b et une pression basse d'environ 0.25 b (schéma subatmosphérique ou Vacuum Swing Adsorption).

Dans le présent mémoire, on parlera de procédé PSA pour désigner indifféremment ces trois types de procédé.

Les adsorbants décrits dans l'art antérieur pour la mise en oeuvre des procédés PSA visant la séparation de l'azote d'un mélange de gaz contenant de l'azote, sont essentiellement des zéolites de type A ou X échangées avec des cations alcalins ou alcalino-terreux, ou quelques autres divalents. Ainsi,

- le brevet McKee US 3140932 décrit l'utilisation de zéolites CaX (zéolite X échangées avec des cations Ca), SrX, BaX et NiX,
- les brevets McKee US 3140933, Chao US 4559217 et Kirner US 5268023, recommandent l'utilisation de zéolites LiX,
- les brevets Coe US 5152813 et Chao US 5174979 décrivent l'utilisation d'une zéolite X échangée avec Li et Ca,
- le brevet Coe US 5258058 recommande l'utilisation d'une zéolite X échangée avec Li plus un cation de la liste Ba, Co, Cu, Cr, Fe, Mg, Mn, Ni, Zn,

La littérature regorge d'études portant sur l'adsorption des gaz de l'air sur zéolites 5A (voir par exemple les ouvrages généraux D.M. Ruthven "Principles of adsorption and adsorption processes" 1987; John Wiley & Sons 1984, R.T. Yang "Gas separation by adsorption processes" ; Butterworths 1987, R.M. Barrer "Zeolites and clay minerals as sorbents and molecular sieves" Academic Press 1978); M. Suzuki "Adsorption Engineering", 1990.

Le choix de l'adsorbant est basé sur la capacité de la zéolite à adsorber beaucoup d'azote à pression haute et à en désorber beaucoup lorsque la pression est abaissée ; cette capacité d'adsorption différentielle (ou "respiration") définit la quantité de gaz traitée à chaque cycle, donc la productivité.

Les zéolites autres que A et X ont été jusqu'ici considérées comme généralement impropres à la séparation de l'azote par PSA à cause de la trop forte courbure de l'isotherme qui empêche la désorption à pression basse. Ainsi, le brevet Coe US 4925460 explique clairement que la Ca-Chabazite est impropre à l'utilisation en PSA, la forme de l'isotherme ne convenant pas. Le brevet Leavitt US 5074892 décrit aussi très bien la nécessité de minimiser la capacité d'adsorption d'azote à la pression basse du cycle.

Ainsi, l'état de l'art recommande de sélectionner les zéolites sur la base d'une capacité d'adsorption d'azote aussi forte que possible à la pression haute du cycle, et aussi faible que possible à la pression basse du cycle.

Outre la capacité d'adsorption d'azote, un autre facteur déterminant pour qualifier une zéolite performante dans un procédé PSA est sa capacité d'adsorption différentielle entre l'azote et l'oxygène, soit sa sélectivité. Cette sélectivité est exprimée par la relation:

$$s = q_{N2}/q_{O2} * P_{O2}/P_{N2}$$

où $q_{N2}$ représente la quantité d'azote adsorbée à la pression partielle d'azote $P_{N2}$ ;
et $q_{O2}$ représente la quantité d'azote adsorbée à la pression partielle d'oxygène $P_{O2}$.

Au regard des critères de capacité d'adsorption d'azote et de sélectivité, on a, à ce jour, considéré que seules les zéolites A, X et les chabazites échangées au lithium, étaient susceptibles d'être mises en oeuvre dans un procédé PSA à l'échelle industrielle.

La sélectivité est, dans l'état de l'art actuel une quantité très difficile à calculer.

Un moyen connu pour améliorer la capacité d'adsorption d'une zéolite consiste à abaisser la température d'adsorption.

Par exemple, le brevet EP 122874 décrit la production d'oxygène à partir d'air par un procédé PSA utilisant une zéolite NaX à une température inférieure à l'ambiante. Par rapport aux zéolites 5A habituelles utilisées à l'ambiante, ce procédé permet d'obtenir une augmentation des performances du procédé PSA en baissant la température jusqu'à -30°C.

D'autres publications montrent l'avantage des basses températures, par exemple Izami et col. "High efficiency oxygen separation with low temperature and low pressure PSA", AIChE, San Francisco, Novembre 1989, où l'on décrit des mesures de performances en PSA de 5 zéolites en fonction de la température, avec détermination d'un optimum entre 0°C et -15°C suivant la zéolite.

Le brevet US 3973931 permet de constater qu'une basse température peut être atteinte spontanément dans une colonne en fonctionnement PSA.

Le brevet US 5169413 décrit un autre procédé PSA fonctionnant en dessous de la température ambiante avec des zéolites.

Il apparaît ainsi que les zéolites peuvent être utilisées avec profit à des températures au dessous de l'ambiante (20°C). Il est même indiqué dans les ouvrages cités plus haut de Ruthven (pages 342,343 et 362), Barrer (pages 103-158),Suzuki (page 36) et Yang (pages 26-44), que la capacité d'adsorption des zéolites baisse lorsque la température augmente.

Par ailleurs, il ressort également de l'art antérieur que, d'une façon générale, on a tendance à systématiquement écarter l'idée d'utiliser une zéolite présentant un isotherme d'adsorption de l'azote dont la courbure serait relativement élevée.

On choisit dans le présent mémoire de représenter ladite courbure par le paramètre :

$$C = \frac{P_2}{P_1} \frac{q(P_1)}{q(P_2)}$$

où $q(P_1)$ représente la quantité d'azote adsorbée à la pression $P_1$ et
$q(P_2)$ celle adsorbée à la pression $P_2$ ; et
les pressions $P_1$ et $P_2$ sont définies respectivement à partir des pressions haute et basse du cycle PSA considéré.

Ainsi, $P_1$ est défini à partir de la pression partielle de l'azote contenu dans un mélange gazeux, tel l'air, à la pression haute du cycle. Par exemple, pour une pression haute de cycle de 1,1 b, $P_1 = 1,1 \times 0,78 = 0,858$ (le mélange gazeux contenant l'azote considéré ici étant l'air; la concentration molaire en azote de l'air étant de 78%).

$P_2$ est défini à partir de la pression partielle de l'azote contenu dans un mélange gazeux donné, à la pression basse du cycle. Ce mélange gazeux consiste habituellement en le gaz résiduaire quittant le lit d'adsorbant, après désorption. Par exemple, pour une pression basse de cycle de 0,35 b et un gaz résiduaire dont la concentration molaire en azote est de 50%, $P_2 = 0,5 \times 0,35 = 0,175$.

Chaque adsorbant travaille à des pressions haute et basse dépendantes du cycle mis en oeuvre et de la nature même de l'adorbant. L'homme du métier est à même d'optimiser, sur la base de ses seules connaissances, lesdites pressions, ce pour chaque adsorbant et cycle mis en oeuvre.

En pratique, les pressions haute et basse sont imposées par des critères tels que :

- pression d'utilisation de l'oxygène produit, pour la pression haute ;
- limitations techniques liées aux installations destinées à mettre en oeuvre le procédé, en particulier des machines soufflantes, compresseurs, pompes à vide ;
- minimisation de la consommation d'énergie.

Or la demanderesse a maintenant découvert de façon tout à fait surprenante que certaines zéolites inutilisables à l'échelle industrielle pour séparer l'air et l'azote dans les conditions habituelles de température utilisées dans les procédés PSA, à savoir une température inférieure ou égale à la température ambiante, pouvaient être avantageusement utilisées à condition de mettre en oeuvre le procédé PSA à une température supérieure à l'ambiante, plus précisément à une température au moins égale à 40°C.

Les zéolites dont l'utilisation est concernée par la présente invention sont des zéolites présentant une courbure relativement importante à 20°C, plus précisément, une courbure qui correspond à une valeur du paramètre C précédemment défini, supérieure ou égale à 2,5.

Ainsi, selon une de ses caractéristiques essentielles, la présente invention concerne un procédé de séparation d'azote d'un mélange de gaz contenant de l'azote et au moins un gaz moins polaire que l'azote, et utilisant une technique d'adsorption différentielle des gaz dite procédé PSA mettant en oeuvre un adsorbant de type zéolite, caractérisé en ce que ledit procédé PSA est mis en oeuvre à une température au moins égale à 40°C en utilisant comme adsorbant une zéolite dont l'isotherme d'adsorption de l'azote à 20°C présente une courbure qui est caractérisée par un paramètre C défini par

$$C = \frac{P_2}{P_1} \frac{q(P_1)}{q(P_2)}$$

où $q(P_1)$ représente la quantité d'azote adsorbée à la pression $P_1$ et
$q(P_2)$ celle adsorbée à la pression $P_2$ ; et
les pressions $P_1$ et $P_2$ sont définies respectivement à partir des pressions haute et basse du cycle PSA considéré ;
C étant au moins égal à 2,5.

Les zéolites utilisables pour la mise en oeuvre du procédé de l'invention sont toutes les zéolites pour lesquelles le paramètre C déterminé à 20°C est supérieur à 2,5.

Selon une variante particulièrement avantageuse de l'invention, le procédé sera mis en oeuvre à une température comprise entre 40 et 70°C.

Le procédé selon l'invention permet d'utiliser des zéolites qui ont jusqu'à maintenant été rejetées en usage PSA à cause de la trop forte courbure de leur isotherme d'azote.

Citons par exemple des mordénites, chabazites, offrétites, érionites, ferrierites, faujasites, notamment de type X ou Y, zéolites A et clinoptilites.

Parmi les zéolites convenant dans le cadre de la présente invention, on choisira avantageusement des zéolites, de préférence des zéolites A ou X ou des chabazites, échangées par au moins un cation polarisant à un taux d'échange au moins égal à 50%, dont le paramètre C est tel que défini ci-dessus.

Ces zéolites sont avantageusement échangées à au moins 50% avec un cation polarisant, de préférence un cation au moins aussi polarisant que le baryum.

A titre d'exemple de cation polarisant utilisable pour échanger des zéolites de l'invention on citera des alcalins tels Li, des alcalino-terreux tels Ca et Sr, Ag, Cu, Cr, Fe, Mg, Mn, Ni, Zn, et leurs mélanges. De tels mélanges peuvent plus particulièrement consister en des mélanges de Li avec l'un de Ca, Sr, Ag, Cu, Cr, Fe, Mg, Mn, Ni, et Zn. Dans le cadre de la présente invention, Ca est un cation polarisant préféré.

Comme on l'a vu précédemment les zéolites sont échangées à un taux d'échange au moins égal à 50% avec des cations polarisants mais ce taux d'échange sera avantageusement plus élevé que ce seuil minimum de 50%.

Ainsi, dans le cas des zéolites A, l'échange par un cation polarisant sera avantageusement fait à un taux au moins égal à 75%.

Dans le cas des zéolites de type faujasites présentant un rapport Si/Al inférieur à 1,5, et plus particulièrement égal à 1, soit essentiellement des zéolites X, l'échange avec le cation polarisant sera avantageusement fait à un taux au moins égal à 60%, de préférence supérieur à 75%.

D'une façon générale, les résultats obtenus seront d'autant meilleurs que le taux d'échange sera plus élevé.

Le procédé de la présente invention s'applique à tous les procédés de séparation de gaz où l'on cherche à séparer l'azote de gaz moins polaires.

Il s'applique ainsi aux procédés de séparation d'hydrogène et d'azote compris dans un mélange gazeux et, tout particulièrement, aux procédés de séparation de l'oxygène et de l'azote compris dans un mélange gazeux, essentiellement l'air, notamment en vue de la production d'oxygène.

Le procédé PSA peut être mis en oeuvre avec des pressions différentielles qui sont celles habituellement utilisées dans tous les procédés de séparation des gaz de l'air en azote et oxygène et faisant appel aux propriétés différentielles d'adsorption des gaz sur des zéolites.

La seule différence concernant la mise en oeuvre du procédé de l'invention par rapport aux procédés PSA classiques est la température à laquelle sont réalisées les adsorptions et désorptions sur les zéolites.

Cette température est dans tous les cas supérieure à 40°C et, de préférence, comprise entre 40 et 100°C. Elle dépend essentiellement de la nature de la zéolite et du taux d'échange.

D'une manière générale, plus l'isotherme d'azote est courbée à 20°C, plus il sera nécessaire de chauffer la zéolite pour obtenir une performance optimale. La courbure de l'isotherme est dépendante des cations et croit avec leur nombre et leur pouvoir polarisant

La température optimale à laquelle est mis en oeuvre le procédé de l'invention est définie en fonction de la nature de la zéolite et des autres conditions de fonctionnement du procédé PSA, en particulier de la productivité, du rendement et de l'énergie.

Ainsi, il est clair qu'au-delà d'une certaine température, par exemple supérieure à 200°C, la capacité d'adsorption d'azote de la zéolite sera trop faible pour être utilisable.

Par ailleurs, le chauffage de la zéolite se traduit par un investissement supplémentaire au niveau de l'installation qu'il faudra, par exemple, isoler et une dépense supplémentaire d'énergie.

Le bilan économique global doit intégrer tous ces facteurs de façon à déterminer le meilleur compromis.

Le chauffage peut être réalisé par tout moyen connu.

On pourra en particulier utiliser un chauffage électrique, un échangeur de chaleur ou un procédé de compression du gaz.

L'homme du métier comprendra aisément que l'apport de chaleur pourra aussi bien être réalisé au niveau du gaz entrant à traiter que de la colonne.

Dans les cas favorables, la chaleur sera apportée par la compression des gaz, ce qui conduira à une économie sur les échangeurs de chaleur.

S'il est utile de chauffer plus, le chauffage pourra être fait par passage du gaz sur des éléments chauffants, par chauffage de la paroi des volumes contenant l'adsorbant, par induction ou chauffage par micro-ondes.

L'homme de métier comprendra que le mode d'apport de la chaleur importe peu.

## Exemples

Les exemples qui suivent sont donnés à titre purement illustratif de l'invention et de ses conditions de mise en oeuvre. Ils sont donnés en référence aux figures 1 à 4 qui représentent respectivement :

- figure 1 : les isothermes d'adsorption de l'azote et de l'oxygène à 20°C sur les zéolites notées I et II dans l'exemple 1;

- figure 2 : les isothermes d'adsorption d'azote et d'oxygène sur la zéolite I à 20°C et la zéolite II à 60°C ;
- figure 3 : la productivité d'un cycle PSA en fonction de la pureté de l'oxygène pour la zéolite II à 60°C et la zéolite I à 25°C ;
- Figure 4: les isothermes d'adsorption de l'azote à différentes températures sur la zéolite III décrite dans l'exemple 2.
- Figure 5 : diagramme représentant la capacité différentielle d'adsorption de l'azote et la sélectivité différentielle de la zéolite III, en fonction de la température.

**Exemple 1**

La zéolite I utilisée dans cet exemple est une zéolite de type CaX dont le taux d'échange est de 65% et le paramètre de courbure C mesuré à 20°C est de 2,2.

La zéolite II, est elle aussi, une zéolite CaX mais présentant un taux d'échange de 95% et le paramètre de courbure C mesuré à 20°C est de 2,9.

On réalise un cycle PSA de production d'oxygène à partir d'air en mettant en oeuvre 3 colonnes utilisées de façon à réaliser un cycle comprenant les trois étapes suivantes :

- une première étape de 30 secondes de production d'oxygène à 1.1 b au cours de laquelle on fait passer de l'air à l'entrée de la colonne, et on récupère l'oxygène à la sortie.
- une deuxième étape de décompression de 30 secondes jusqu'à 0.26 b au cours de laquelle l'azote est désorbé à contre-courant ;
- une troisième étape de recompression de 30 secondes avec l'oxygène jusqu'à 1.1 b.

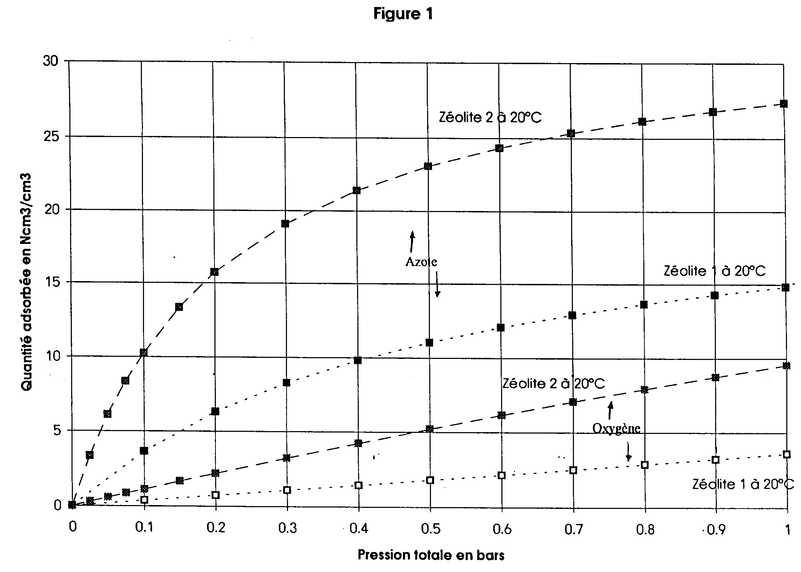

En référence à la figure 1, il apparaît que l'isotherme d'adsorption à 20°C de l'azote sur la zéolite II est très courbée, et que donc, pour les conditions déjà citées de $P_1 = 1,1$b et $P_2 = 0.26$ b, la respiration sur l'azote est inférieure à celle de la zéolite I, et la quantité d'oxygène adsorbée est 2 fois plus élevée, ce qui conduit à des performances en PSA inférieures pour la zéolite I,.

La zéolite II serait a priori rejetée par l'homme de l'art car à 20°C elle présente une isotherme d'azote très courbée qui conduit à des performances médiocres dans un cycle PSA transatmospherique dont les pressions hautes et basses sont de 1,1 b et 0,26 b.

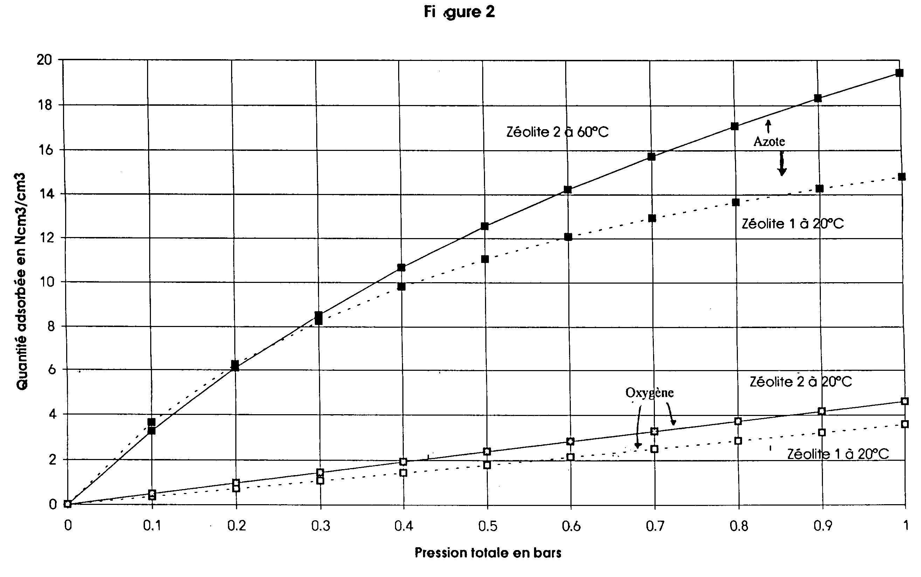

La figure 2 donne les isothermes d'adsorption d'azote et d'oxygène de la zéolite I à 20°C et de la zéolite II à 60°C.

Il apparaît sur la figure 2 que l'isotherme à 60°C de la zéolite II est bien moins courbée qu'elle ne l'était à 20°C et qu'elle est très proche de l'isotherme à 20°C de la zéolite I. Par ailleurs, les sélectivités N2/O2 mesurées à 1 b et à 0,2 b, sont très voisines. Cette fois-ci, la zéolite II se compare donc favorablement à la zéolite I.

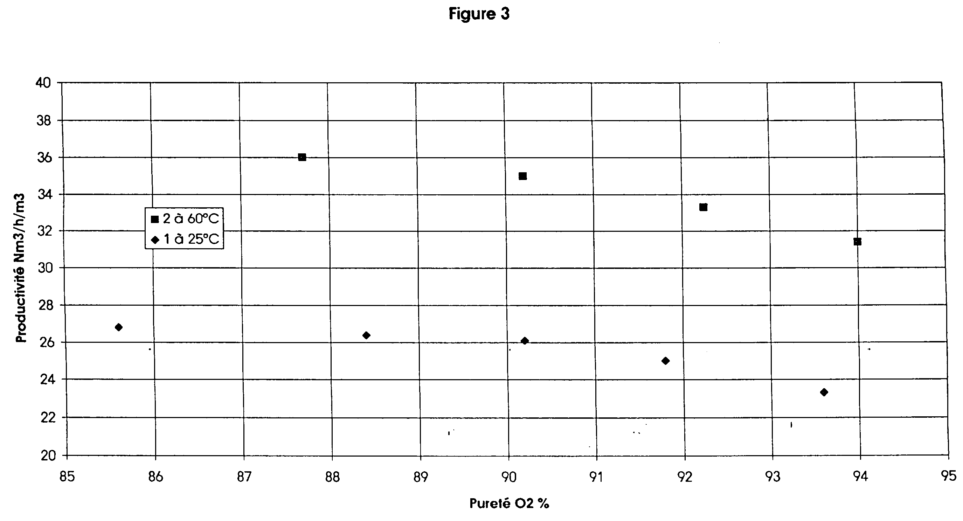

La figure 3 donne la productivité pour un cycle de PSA tel que défini précédemment, à savoir le volume d'oxygène produit par heure et par $m^3$ de zéolite dans le cas de la zéolite II à 60°C et de la zéolite I à 25°C.

Il apparaît sur la figure 3 que les performances des deux zéolites I à 25°C et II à 60°C dans un cycle de PSA industriel sont très différentes, avec un net avantage pour la zéolite II.

**Exemple 2**

On utilise dans cet exemple une zéolite notée III qui est une chabazite échangée au Ca, décrite dans le brevet US 4,732,584. Il est indiqué dans le brevet US 4,925,460 que cette zéolite ne convient pas pour un procédé PSA.

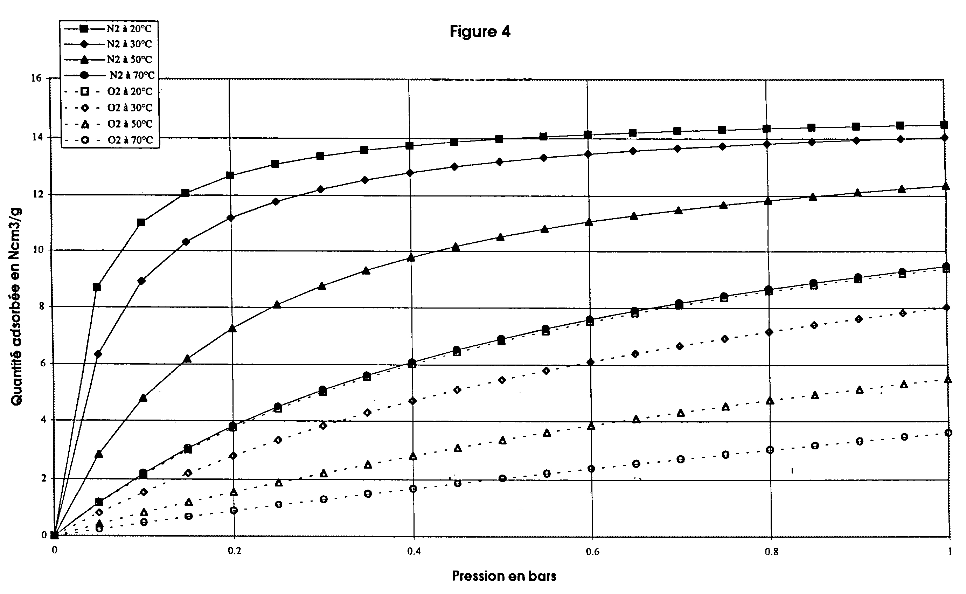

La figure 4 donne les isothermes d'adsorption de l'azote à 20°; 30°, 50° et 70°C, obtenues avec cette chabazite. Le paramètre de courbure C mesuré à 20°C de cette zéolite III est de 4,4. On calcule pour les pressions haute (1b) et basse (0,2b) du procédé PSA, les différences $\Delta q$ des quantités d'azote adsorbées à ces deux pressions.

Ces quantités sont données dans le tableau ci-après :

| Température (°C) | $\Delta q(Nm^3/g)$ |
|---|---|
| 20 | 1,7 |
| 30 | 4,9 |
| 50 | 5,1 |
| 60 | 5,7 |
| 70 | 5,6 |
| 90 | 4,3 |

La zéolite III se révèle donc parfaitement intéressante en VSA dès 80°C.

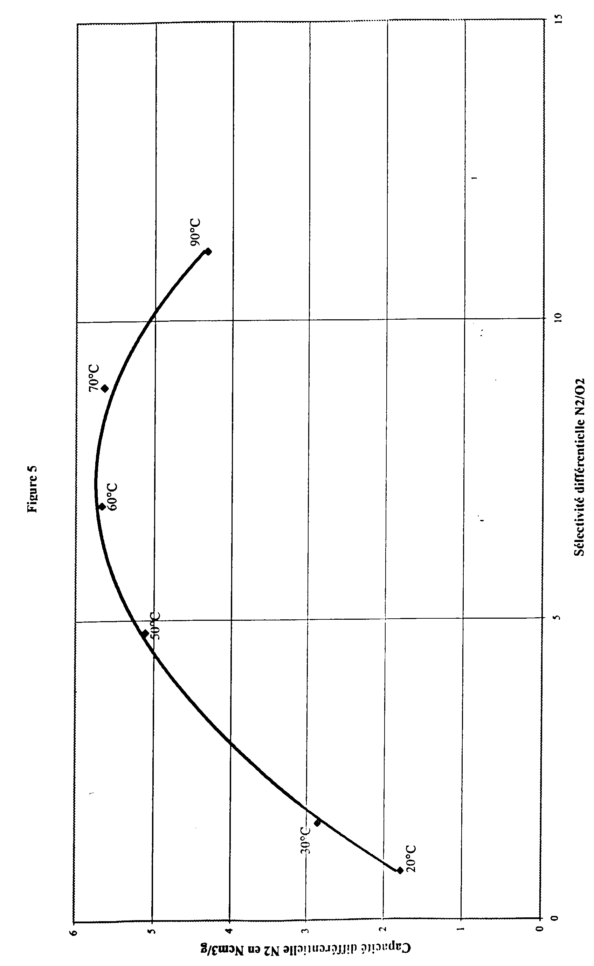

La figure 5 représente la capacité différentielle d'adsorption de l'azote et la sélectivité différentielle de la zéolite III, en fonction de la température. La température optimale de cette zéolite III apparaît être d'environ 60°C à 70 C.

**Revendications**

1. Procédé de séparation d'azote d'un mélange de gaz contenant de l'azote et au moins un gaz moins polaire que l'azote, et utilisant une technique d'adsorption différentielle des gaz dite procédé PSA mettant en oeuvre un adsorbant de type zéolite, selon lequel on met en oeuvre le procédé PSA à une température au moins égale à 40°C en utilisant comme adsorbant une zéolite dont l'isotherme d'adsorption de l'azote à 20°C présente une courbure caractérisée par un paramètre C défini par la formule :

$$C = \frac{P_2\, q(P_1)}{P_1\, q(P_2)}$$

où $q(P_1)$ représente la quantité d'azote adsorbée à la pression $P_1$ et
$q(P_2)$ celle adsorbée à la pression $P_2$ ; et
les pressions $P_1$ et $P_2$ sont définies respectivement à partir des pressions haute et basse du cycle PSA considéré ;
C étant au moins égal à 2,5.

2. Procédé selon la revendication 1, caractérisé en ce que ledit procédé PSA est mis en oeuvre à une température comprise entre 40 et 70°C.

3. Procédé selon l'une des revendications 1 ou 2, caractérisé en ce que la zéolite est échangée par au moins un cation polarisant à un taux d'échange au moins égal à 50%.

4. Procédé selon l'une des revendications 1 à 3, caractérisé en ce que la zéolite est une zéolite de type A, X ou une chabazite.

5. Procédé selon l'une des revendications 1 à 4, caractérisé en ce que ledit cation polarisant est un cation au moins aussi polarisant que le baryum.

6. Procédé selon l'une des revendications 1 à 5, caractérisé en ce que ledit cation polarisant est le lithium, le calcium ou le strontium.

7. Procédé selon l'une des revendications 1 à 6, caractérisé en ce que ladite zéolite est une zéolite A échangée par un cation polarisant à un taux d'échange au moins égal à 75%.

8. Procédé selon l'une des revendications 1 à 6, caractérisé en ce que ladite zéolite est une zéolite de type X dont le rapport Si/Al est inférieur à 1,5, de préférence inférieur à 1,25, échangée par au moins un cation polarisant à un taux d'échange au moins égal à 60%.

9. Procédé selon la revendication 8, caractérisé en ce que ladite zéolite X est échangée par au moins un cation polarisant à un taux d'échange au moins égal à 75%.

10. Procédé selon l'une des revendications 1 à 9, caractérisé en ce que ledit mélange gazeux est de l'air.

11. Procédé selon l'une des revendications 1 à 9, caractérisé en ce que ledit mélange gazeux comprend de l'hydrogène et de l'azote.

Figure 1

Figure 2

Figure 3

EP 0 733 394 A1

Figure 4

Figure 5

Office européen
des brevets

**RAPPORT DE RECHERCHE EUROPEENNE**

Numero de la demande

EP 96 40 0514

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP-A-0 606 848 (AIR PRODUCTS AND CHEMICALS INC.)<br>* page 4, ligne 39 - ligne 45 *<br>* page 6, ligne 46 - ligne 57; revendications 1-19; tableaux 2,3 * | 1-7,10 | B01D53/047 |
| X | EP-A-0 042 159 (AIR PRODUCTS AND CHEMICALS INC.)<br>* page 3, ligne 18 - ligne 26 *<br>* page 7, ligne 19 - ligne 24 *<br>* page 20, ligne 23 - page 21, ligne 15; revendications 1-3; exemple * | 1,2,4,10 | |
| X,D | US-A-3 973 931 (UNION CARBIDE CORP.)<br><br>* colonne 2, ligne 64 - colonne 3, ligne 24 *<br>* colonne 4, ligne 38 - ligne 46 *<br>* colonne 20, ligne 59 - colonne 21, ligne 56; exemples II,IV,V * | 1,2,4-6, 10 | |
| X,D | US-A-5 268 023 (AIR PRODUCTS AND CHEMICALS INC.)<br>* colonne 2, ligne 46 - ligne 48 *<br>* colonne 7, ligne 58 - colonne 8, ligne 16; revendications 1-17; tableau 1 * | 1-6,8-11 | DOMAINES TECHNIQUES RECHERCHES (Int.Cl.6)<br><br>B01D |
| X,D | US-A-5 174 979 (UOP )<br>* colonne 8, ligne 28 - ligne 43; revendications 1-22 * | 1-7,9,10 | |
| X,D | US-A-4 925 460 (AIR PRODUCTS AND CHEMICALS INC.)<br>* colonne 3, ligne 10 - ligne 29 *<br>* colonne 6, ligne 36 - ligne 39; revendications 1-20 * | 1-6,10, 11 | |

Le présent rapport a été établi pour toutes les revendications

| Lieu de la recherche | Date d'achèvement de la recherche | Examinateur |
|---|---|---|
| LA HAYE | 18 Avril 1996 | Eijkenboom, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................
& : membre de la même famille, document correspondant

EPO FORM 1503 03.82 (P04C02)